# EUROPEAN PATENT APPLICATION

(11) **EP 3 528 140 A1**
(43) Date of publication of application: **21.08.2019**
(21) Application number: 16919500.5
(22) Date of filing: 19.10.2016
(51) Int. Cl.: G06F 17/30

(54) **PICTURE PROCESSING METHOD, DEVICE, ELECTRONIC DEVICE AND GRAPHIC USER INTERFACE**

(71) Applicant: Huawei Technologies Co., Ltd., Longgang District Shenzhen, Guangdong 518129 (CN)
(72) Inventor: HUANG, Liwei, Shenzhen Guangdong 518129 (CN); LIU, Zhenyu, Shenzhen Guangdong 518129 (CN)
(74) Representative: Epping - Hermann - Fischer
(86) International application number: PCT/CN2016/102587
(87) International publication number: WO 2018/072149

(57) **Abstract**

Embodiments of the present invention relate to picture processing technologies, and in particular, to a picture processing method and apparatus, an electronic device, and a graphical user interface. The picture processing method includes: receiving a picture generation instruction, and generating an information storage picture in response to the picture generation instruction, where the information storage picture includes first information; generating an information card based on the information storage picture, where the information card includes at least some information in the first information; and displaying the information card on a preset display interface of the electronic device. Key information in the information storage picture is displayed on the preset display interface of the electronic device, so that convenience of viewing information by a user is greatly improved.

## Description

### TECHNICAL FIELD

Embodiments of the present invention relate to data processing technologies, and in particular, to a picture processing technology.

### BACKGROUND

At present, users perform and process increasing transactions by using smartphones, for example, online shopping, cinema ticket reservation, and chatting and dating with friends by using instant messaging software. When users need to record information useful to themselves, they usually directly perform screen capture on a screen. For example, after agreeing upon a dating time and place with a friend, a user may directly perform screen capture on a current chat screen to record the chat information. On the other hand, when users find, in daily life, external information useful to themselves, they usually record the external information through photographing. For example, when a user sees a propaganda poster of a concert, the user usually photographs the poster by using a mobile phone, to record information such as a time and place of the concert. When users need to use information, they may directly search an image library of a mobile phone for a screenshot or photo that records the information.

However, a smartphone usually stores massive pictures generated for various reasons. When there are increasing pictures, if a user needs to find a specific picture, the user usually needs to search an entire image library, consuming time and labor during search.

### SUMMARY

Embodiments of the present invention provide a picture processing method and apparatus, an electronic device, and a graphical user interface, to improve convenience of viewing, by a user by using an electronic device, information recorded by the user.

According to a first aspect, an embodiment of the present invention provides a picture processing method. The picture processing method is applied to an electronic device, and includes:
receiving a picture generation instruction, and generating an information storage picture in response to the picture generation instruction, where the information storage picture includes first information;
generating an information card based on the information storage picture, where the information card includes at least some information in the first information; and
displaying the information card on a preset display interface of the electronic device.

In this technical solution in this embodiment of the present invention, when receiving the picture generation instruction, the electronic device generates the information card based on the generated information storage picture and displays the information card on the preset display interface, so that a user can directly view key information in the information storage picture by using the preset display interface of the electronic device and does not need to search an image library for the picture, thereby improving convenience of viewing information by the user.

In a first possible implementation of the first aspect, the picture generation instruction includes a screen capture instruction or a photographing instruction.

With reference to the first aspect or the first possible implementation of the first aspect, in a second possible implementation, before the generating an information card based on the information storage picture, the method further includes:
displaying information card generation prompt information, where the information card generation prompt information is used to inquire whether the information card is allowed to be generated based on the information storage picture.

There are lots of reasons for generating a picture by the user by using the electronic device. Therefore, an information card is generated, based on a selection of the user, for a picture required by the user, to improve intelligence of human-electronic-device interaction.

With reference to any one of the first aspect or the first and the second possible implementations of the first aspect, in a third possible implementation, after the generating an information card based on the information storage picture, the method further includes:
displaying information card editing prompt information, where the information card editing prompt information is used to inform that information in the information card is allowed to be edited by a user; or
that information in the information card is in an editable state; or
receiving an information card editing instruction entered by a user, and setting information in the information card to an editable state in response to the information card editing instruction; and
the displaying the information card on a preset display interface of the electronic device includes:
   displaying an edited information card on the preset display interface of the electronic device.

The information in the information card is allowed to be edited by the user, so that the user can further modify the information in the information card based on a requirement of the user, thereby improving the intelligence of human-electronic-device interaction.

With reference to any one of the first aspect or the first to the third possible implementations of the first aspect, in a fourth possible implementation, the method further includes:
determining whether the first information includes time information; and
if the first information includes the time information, generating a reminded event based on the time information in the first information, where the reminded event is generating a reminder action when or before a system time of the electronic device reaches a time indicated by the time information, and the reminder action includes at least one of the following actions: vibration, screen light-up, prompt information displaying, and ringing.

With reference to the fourth possible implementation of the first the aspect, in a fifth possible implementation, the generating a reminded event based on the time information in the first information includes:
determining whether the time information in the first information is later than the system time of the electronic device; and
if the time indicated by the time information in the first information is later than the system time of the electronic device, generating the reminded event based on the time information in the first information.

If the information storage picture includes the time information, the reminded event is automatically created when the information card is generated, so as to inform, in time, the user of processing a transaction in the information card.

With reference to any one of the fourth possible implementation and the fifth possible implementation of the first aspect, in a sixth possible implementation, after the generating the reminded event, the method further includes:
when the system time of the electronic device is later than the time indicated by the time information in the first information, deleting the information card.

An expired information card is automatically deleted, to prevent the expired information card from continuing to occupy a home screen page of the electronic device, thereby improving the intelligence of human-electronic-device interaction.

With reference to any one of the first aspect or the first to the sixth possible implementations of the first aspect, in a seventh possible implementation, when there are a plurality of the information cards, the displaying the information card on a preset display interface of the electronic device includes:
determining, according to a preset priority rule, an information card having a highest priority in the plurality of the information cards, where the preset priority rule includes an importance priority and/or a time priority; and
displaying the information card having the highest priority on the preset display interface of the electronic device; or
displaying, on the preset display interface of the electronic device, the information card having the highest priority and a display portal for viewing another information card.

When the electronic device stores the plurality of information cards, the information card having the highest priority is displayed on the preset display interface, so that the user can conveniently view most important information.

With reference to any one of the first aspect or the first to the seventh possible implementations of the first aspect, in an eighth possible implementation, before the receiving a picture generation instruction, and generating an information storage picture in response to the picture generation instruction, the method further includes:
receiving an information card setting instruction, where the information card setting instruction is used to set to generate the information card based on the information storage picture when screen capture is performed on a user interface of a first application in the electronic device to generate the information storage picture; and
the generating an information card based on the information storage picture includes:
   determining whether the information storage picture is a picture generated by performing screen capture on the user interface of the first application; and
   if the information storage picture is the picture generated by performing screen capture on the user interface of the first application, generating the information card based on the information storage picture.

According to a setting of the user, an information card generation process is triggered for an application program concerned by the user, to avoid that information truly concerned by the user is covered because excessive information cards are generated, thereby improving the intelligence of human-electronic-device interaction.

With reference to any one of the first aspect or the first to the eighth possible implementations of the first aspect, in a ninth possible implementation, the preset display interface includes a home screen page, a lock screen interface, or a notification bar interface.

With reference to any one of the first aspect or the first to the ninth possible implementations of the first aspect, in a tenth possible implementation, the first information includes at least one of image information, text information, the time information, and hyperlink information.

With reference to the first aspect or any possible implementation of the first aspect, in another possible implementation, if the information card is generated based on a screenshot, the information card further includes a startup control, and the startup control is used to start an application program corresponding to the screenshot.

When the user taps the startup control on the information card, the application corresponding to the screenshot can be directly started. The user does not need to research a plurality of application programs of the electronic device for the application or open the application, thereby improving the intelligence of human-electronic-device interaction.

According to a second aspect, an embodiment of the present invention provides a picture processing apparatus, including:
a receiving module, configured to receive a picture generation instruction;
a processing module, configured to: generate an information storage picture in response to the picture generation instruction received by the receiving module, where the information storage picture includes first information; generate an information card based on the information storage picture, where the information card includes at least some information in the first information; and instruct a display module to display the information card on a preset display interface of the electronic device; and
the display module, configured to display the information card on the preset display interface of the electronic device.

In this technical solution in this embodiment of the present invention, when receiving the picture generation instruction, the electronic device generates the information card based on the generated information storage picture and displays the information card on the preset display interface, so that a user can directly view key information in the information storage picture by using the preset display interface of the electronic device and does not need to search an image library for the picture, thereby improving convenience of viewing information by the user.

In a first possible implementation of the second aspect, the picture generation instruction includes a screen capture instruction or a photographing instruction.

With reference to the second aspect or the first possible implementation of the second aspect, in a second possible implementation, the preset display interface includes a home screen page, a lock screen interface, or a notification bar interface.

According to a third aspect, an embodiment of the present invention provides an electronic device, including:
a touchscreen, configured to receive a picture generation instruction;
a processor, configured to: generate an information storage picture in response to the picture generation instruction received by the receiving module, where the information storage picture includes first information; generate an information card based on the information storage picture, where the information card includes at least some information in the first information; and instruct a display to display the information card on a preset display interface of the electronic device; and
the display, configured to display the information card on the preset display interface of the electronic device.

In this technical solution in this embodiment of the present invention, when receiving the picture generation instruction, the electronic device generates the information card based on the generated information storage picture and displays the information card on the preset display interface, so that a user can directly view key information in the information storage picture by using the preset display interface of the electronic device and does not need to search an image library for the picture, thereby improving convenience of viewing information by the user.

In a first possible implementation of the third aspect, the picture generation instruction includes a screen capture instruction or a photographing instruction.

With reference to the third aspect or the first possible implementation of the third aspect, in a second possible implementation, the processor is further configured to:
generate information card generation prompt information, where the information card generation prompt information is used to inquire whether the information card is allowed to be generated based on the information storage picture; and
the display is further configured to display the information card generation prompt information.

There are lots of reasons for generating a picture by the user by using the electronic device. Therefore, an information card is generated, based on a selection of the user, for a picture required by the user, to improve intelligence of human-electronic-device interaction.

With reference to any one of the third aspect or the first and the second possible implementations of the third aspect, in a third possible implementation, the processor is further configured to:
generate information card editing prompt information, where the information card editing prompt information is used to inform that information in the information card is allowed to be edited by a user; and
the display is further configured to display the information card editing prompt information.

With reference to any one of the third aspect or the first and the second possible implementations of the third aspect, in a fourth possible implementation, the processor is further configured to:
set information in the information card to an editable state; and
the display is further configured to display the information card in the editable state.

The information in the information card is allowed to be edited by the user, so that the user can further modify the information in the information card based on a requirement of the user, thereby improving the intelligence of human-electronic-device interaction.

With reference to any one of the third aspect or the first to the fourth possible implementations of the third aspect, in a fifth possible implementation, the processor is further configured to:
determine whether the first information includes time information; and if the first information includes the time information, generate a reminded event based on the time information in the first information, where the reminded event is generating a reminder action when or before a system time of the electronic device reaches a time indicated by the time information, and the reminder action includes at least one of the following actions: vibration, screen light-up, prompt information displaying, and ringing.

With reference to any one of the third aspect or the first to the fifth possible implementations of the third aspect, in a sixth possible implementation, the processor is further configured to:
determine whether the time information in the first information is later than the system time of the electronic device; and if the time indicated by the time information in the first information is later than the system time of the electronic device, generate the reminded event based on the time information in the first information.

If the information storage picture includes the time information, the reminded event is automatically created when the information card is generated, so as to inform, in time, the user of processing a transaction in the information card.

With reference to any of the fifth possible implementation and the sixth possible implementation of the third aspect, in a seventh possible implementation, the processor is further configured to:
when the system time of the electronic device is later than the time indicated by the time information in the first information, delete the information card.

An expired information card is automatically deleted, to prevent the expired information card from continuing to occupy a home screen page of the electronic device, thereby improving the intelligence of human-electronic-device interaction.

With reference to any one of the third aspect or the first to the seventh possible implementations of the third aspect, in an eighth possible implementation, when there are a plurality of the information cards, the processor is further configured to:
determine, according to a preset priority rule, an information card having a highest priority in the plurality of the information cards, where the preset priority rule includes an importance priority and/or a time priority; and instruct the display to display the information card having the highest priority on the preset display interface of the electronic device; and
the display is further configured to display the information card having the highest priority on the preset display interface of the electronic device.

With reference to any one of the third aspect or the first to the seventh possible implementations of the third aspect, in a ninth possible implementation, when there are a plurality of the information cards, the processor is further configured to:
determine, according to a preset priority rule, an information card having a highest priority in the plurality of the information cards, where the preset priority rule includes an importance priority and/or a time priority; instruct the display to display the information card having the highest priority on the preset display interface of the electronic device; and instruct the display to display, on the preset display interface of the electronic device, the information card having the highest priority and a display portal for viewing another information card; and
the display is further configured to display, on the preset display interface of the electronic device, the information card having the highest priority and the display portal for viewing the another information card.

When the electronic device stores the plurality of information cards, the information card having the highest priority is displayed on the preset display interface, so that the user can conveniently view most important information.

With reference to any one of the third aspect or the first to the ninth possible implementations of the third aspect, in a tenth possible implementation, the touchscreen is further configured to:
receive an information card setting instruction, where the information card setting instruction is used to set to generate the information card based on the information storage picture when screen capture is performed on a user interface of a first application in the electronic device to generate the information storage picture; and
the processor is further configured to:
   determine whether the information storage picture is a picture generated by performing screen capture on the user interface of the first application; and if the information storage picture is the picture generated by performing screen capture on the user interface of the first application, generate the information card based on the information storage picture.

According to a setting of the user, an information card generation process is triggered for an application program concerned by the user, to avoid that information truly concerned by the user is covered because excessive information cards are generated, thereby improving the intelligence of human-electronic-device interaction.

With reference to any one of the third aspect or the first to the tenth possible implementations of the third aspect, in an eleventh possible implementation, the preset display interface includes a home screen page, a lock screen interface, or a notification bar interface.

With reference to any one of the third aspect or the first to the eleventh possible implementations of the third aspect, in a twelfth possible implementation, the first information includes at least one of image information, text information, the time information, and hyperlink information.

With reference to the third aspect or any possible implementation of the third aspect, in another possible implementation, if the information card is generated based on a screenshot, the processor is further configured to generate the information card including a startup control, and the startup control is used to start an application program corresponding to the screenshot.

When the user taps the startup control on the information card, the application corresponding to the screenshot can be directly started. The user does not need to research a plurality of application programs of the electronic device for the application or open the application, thereby improving the intelligence of human-electronic-device interaction.

According to a fourth aspect, an embodiment of the present invention provides a graphical user interface on an electronic device. The electronic device includes a display, one or more input devices, a memory, and one or more processors configured to execute one or more programs stored in the memory, and the graphical user interface includes:
a user interface including first information, where
in response to a received screen capture instruction, screen capture is performed, on the user interface including the first information, based on the screen capture instruction to generate an information storage picture, and an information card is generated based on the information storage picture, where the information card includes at least some information in the first information; and
the information card is displayed on a preset display interface.

According to a fifth aspect, an embodiment of the present invention provides a graphical user interface on an electronic device. The electronic device includes a display, one or more cameras, one or more input devices, a memory, and one or more processors configured to execute one or more programs stored in the memory, and the graphical user interface includes:
a photographing user interface of the camera, where
in response to a received photographing instruction, an information storage picture is generated based on the photographing instruction, where the information storage picture includes first information; and an information card is generated based on the information storage picture, where the information card includes at least some information in the first information; and
the information card is displayed on a preset display interface.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1A is a schematic structural diagram of an electronic device;
FIG. 1B is a schematic architectural diagram of software of the electronic device in FIG. 1A;
FIG. 2 is a schematic diagram of a screenshot of a user interface of a browser;
FIG. 3 shows an information card generated based on the screenshot shown in FIG. 2;
FIG. 4 is a schematic flowchart of a picture processing method according to an embodiment of the present invention;
FIG. 5 is a schematic diagram of generating an information card after screen capture is performed on a user interface of a shopping application;
FIG. 6A is a schematic diagram of a screenshot;
FIG. 6B is a schematic diagram of layers of the screenshot in FIG. 6A;
FIG. 6C is a schematic diagram of an information card generated based on FIG. 6A;
FIG. 7 is a schematic diagram of generating an information card based on a photographed photo;
FIG. 8 is a schematic diagram of information card generation prompt information;
FIG. 9 is a schematic diagram of setting an information card to an editable state;
FIG. 10 is a schematic flowchart of another picture processing method according to an embodiment of the present invention;
FIG. 11 is a schematic flowchart of an information card displaying method according to an embodiment of the present invention;
FIG. 12 is a schematic diagram of a user interface when a plurality of information cards are displayed; and
FIG. 13 is a schematic diagram of another user interface when a plurality of information cards are displayed.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

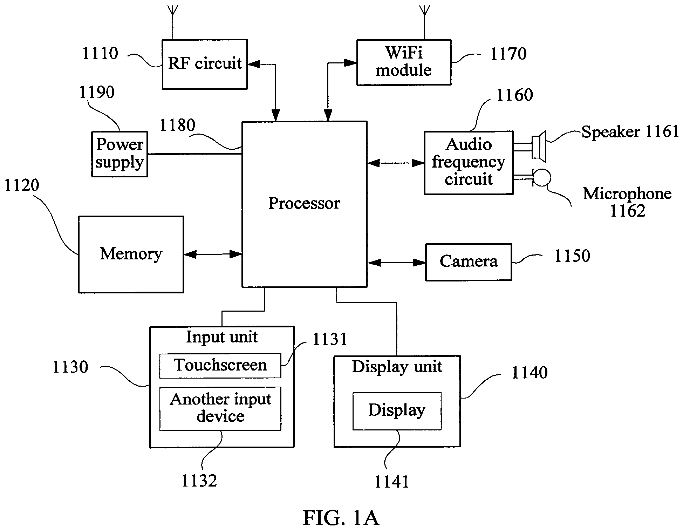

FIG. 1A is a schematic structural diagram of an electronic device. The electronic device 100 includes components such as a radio frequency (Radio Frequency, RF) circuit 1110, a memory 1120, an input unit 1130, a display unit 1140, a camera 1150, an audio frequency circuit 1160, a Wireless Fidelity (Wireless Fidelity, WiFi) module 1170, a processor 1180, and a power supply 1190. These components perform communication through one or more communications buses or signal cables. The electronic device 100 may be any electronic device, includes, but is not limited to, a smartphone, a handheld computer, a tablet computer, a mobile phone, a media player, a personal digital assistant (PDA), or the like, and further includes a combination of two or more thereof. Persons skilled in the art may understand that a device structure shown in FIG. 1A does not constitute a limitation to the electronic device. The electronic device may include more components or fewer components than those shown in the figure, or some components may be combined, or a different component deployment may be used.

Each component of the electronic device 100 is specifically described below with reference to FIG. 1A.

The RF circuit 1110 may be configured to receive and send a signal in an information receiving and sending process or a call process. Particularly, the RF circuit 1110 receives downlink information from a base station and then delivers the downlink information to the processor 1180 for processing, and additionally sends uplink data to the base station. Generally, the RF circuit includes, but is not limited to, an antenna, at least one amplifier, a transceiver, a coupler, a low noise amplifier (Low Noise Amplifier, LNA), a duplexer, and the like. In addition, the RF circuit 1110 may also communicate with a network and another device through wireless communication. Any communications standard or protocol may be used for the wireless communication, and includes, but is not limited to, a Global System for Mobile Communications (Global System of Mobile Communication, GSM), a General Packet Radio Service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, a short messaging service (Short Messaging Service, SMS), and the like.

The memory 1120 may be configured to store a software program and module. The processor 1180 runs the software program and module stored in the memory 1120, to execute various functional applications of the electronic device and perform data processing. The memory 1120 may mainly include a program storage area and a data storage area. The program storage area may store an operating system, an application program required by at least one function (such as a sound playing function and an image playing function), and the like. The data storage area may store data (such as a picture, video data, audio data, and a phone book) created based on use of the electronic device, and the like. In addition, the memory 1120 may include a high speed random access memory, and may further include a non-volatile memory, such as at least one magnetic disk storage device, a flash storage device, or another volatile solid-state storage device.

The input unit 1130 may be configured to: receive input gesture information or digit or character information, and generate key signal input related to user setting and function control of the electronic device 100. For example, the input unit 1130 receives screen capture indication information entered by a user, and performs screen capture on a current screen in response to the screen capture indication information. Specifically, the input unit 1130 may include a touchscreen 1131 and another input device 1132. The touchscreen 1131 may collect a touch control operation of the user on or near the touchscreen 1131 (such as an operation of the user on or near the touchscreen 1131 by using any suitable object or accessory such as a finger or a stylus), and drive a corresponding connection apparatus according to a preset program. Specifically, the touch control operation may include one or more of the following operation manners: for example, a pressure operation, a touch operation (such as a slide operation or a drag operation), a tap operation, a multi-touch-point operation, button input, and touch-and-hold input. In addition to the touchscreen 1131, the input unit 1130 may further include the another input device 1132. Specifically, the another input device 1132 may include, but is not limited to, one or more of a physical keyboard, a physical functional button (such as a volume control button or a switch button), a trackball, a mouse, and a joystick.

The display unit 1140 may be configured to display information entered by the user or information provided for the user, and various menus of the electronic device. The display unit 1140 may include a display 1141. Optionally, the display 1141 may be configured in a form of a liquid crystal display (Liquid Crystal Display, LCD), an organic light-emitting diode (Organic Light-Emitting Diode, OLED), or the like. Further, the touchscreen 1131 may cover the display 1141. After detecting a touch operation on or near the touchscreen 1131, the touchscreen 1131 transfers the touch operation to the processor 1180, to determine a type of a touch event. Subsequently, the processor 1180 provides corresponding visual output on the display 1141 based on the type of the touch event. Although, in FIG. 1A, the touchscreen 1131 and the display 1141 are used as two separate parts to implement input and output functions of the electronic device, in some embodiments, the touchscreen 1131 and the display 1141 may be integrated to implement the input and output functions of the electronic device.

The electronic device may further include at least one camera 1150. The electronic device may capture and record a static or dynamic image by using the camera 1150 connected to one or more I/O ports. The static image photographed by using the camera 1150 is stored in the memory 1120 in a picture format. The dynamic image photographed by using the camera 1150 is stored in the memory 1120 in a video format. Next, the static image may be viewed and even edited and transferred to another user by the user by using an image viewing application (for example, an image library application). The dynamic image may be viewed and the like by the user by using a video viewing application.

The audio frequency circuit 1160, a speaker 1161, and a microphone 1162 may provide an audio interface between the user and the electronic device. The audio frequency circuit 1160 may convert received audio data into an electric signal and transmit the electric signal to the speaker 1161. The speaker 1161 converts the electric signal into a sound signal for output. On the other hand, the microphone 1162 converts a collected sound signal into an electric signal. The audio frequency circuit 1160 receives the electric signal and converts the electric signal into audio data, and outputs the audio data to the processor 1180 for processing. Then, the processor 180 sends the audio data to, for example, another electronic device by using the RF circuit 1110, or outputs the audio data to the memory 1120 for further processing.

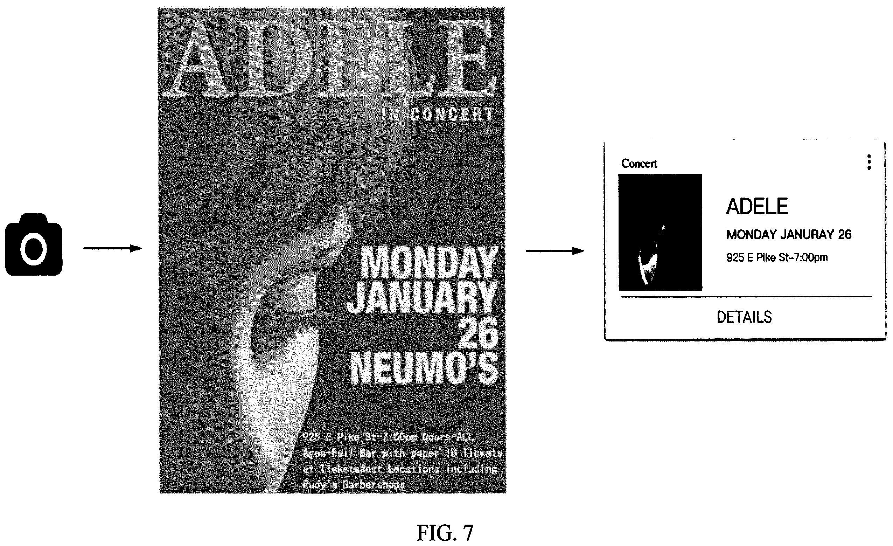

WiFi belongs to a short distance wireless transmission technology. The electronic device may help, by using the WiFi module 1170, the user receive and send e-mails, browse a web page, access streaming media, and the like. The WiFi module 1170 provides wireless broadband Internet access for the user. Although FIG. 7 shows the WiFi module 1170, it may be understood that the WiFi module 1170 is not a necessary component of the electronic device, and when required, the WiFi module 1170 may be omitted as long as the scope of the essence of the present invention is not changed.

The processor 1180 is a control center of the electronic device, and connects to each component of the entire electronic device by using various interfaces and lines. By running or executing the software program and/or module stored in the memory 1120, and invoking data stored in the memory 1120, the processor 180 performs various functions of the electronic device and processes data, thereby performing overall monitoring on the electronic device. Optionally, the processor 1180 may include one or more processing units. Preferably, the processor 1180 may integrate an application processor and a modem processor. The application processor mainly processes the operating system, a user interface, an application program, and the like. The modem processor mainly processes wireless communication. Specifically, the processor 1180 further includes a graphics processing unit (Graphics Processing Unit, "GPU" for short), configured to process operations such as image generation and displaying of the electronic device. It may be understood that the modem processor may alternatively not be integrated into the processor 1180. The application processor and the graphics processing unit may be located in mutually independent chips, or may be integrated into a same chip.

The electronic device further includes the power supply 1190 (for example, a battery) that supplies power to each component. Preferably, the power supply may be logically connected to the processor 1180 by using a power management system, so as to implement functions such as charging, discharging, and power consumption management by using the power management system.

Although not shown, the electronic device may further include a Bluetooth module, a GPS module, and the like, and details are not described herein.

In a running process of the electronic device, in addition to the foregoing hardware, the operating system and some application programs run above a hardware layer. The electronic device processes image data of a picture in the operating system. The operating system may be an operating system such as an iPhone operating system (iPhone Operating System, iOS for short), an Android (Android) operating system, a Microsoft (Windows) operating system, a Symbian (Symbian) operating system, or a Black Berry operating system (Black Berry Operating System). This is not specifically limited in this application.

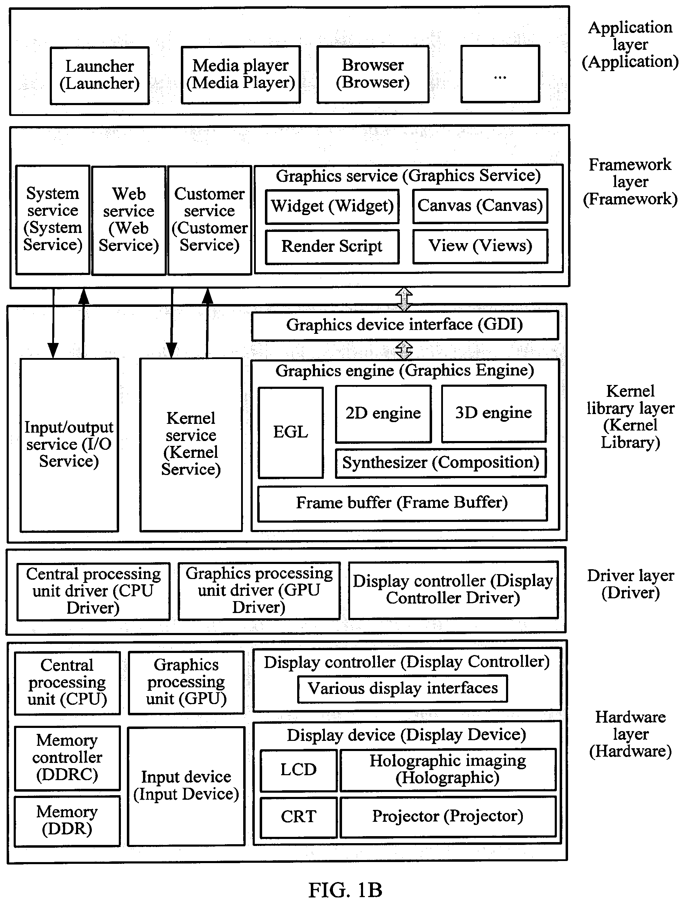

FIG. 1B is a schematic architectural diagram of software of the electronic device in FIG. 1A. As shown in FIG. 1B, a kernel library above the hardware layer is a core part of the operating system, and includes an input/output service, a kernel service, a graphics device interface, graphics engines (Graphics Engine) for implementing image processing of a CPU and the GPU, and the like. The graphics engines may include a two-dimensional engine, a three-dimensional engine, a synthesizer (Composition), a frame buffer (Frame Buffer), an embedded graphics library (Embedded Graphics Library, EGL for short), and the like. In addition, the operating system further includes a driver layer, a framework layer, and an application layer. The driver layer may include a CPU driver, a GPU driver, a display controller driver, and the like. The framework layer may include a graphics service (Graphic Service), a system service (System service), a web service (Web Service), a customer service (Customer Service), and the like. The graphics service may include, for example, a widget (Widget), a canvas (Canvas), a view (Views), and a render script. The application layer may include a launcher (launcher), a media player (Media Player), a browser (Browser), and the like.

A method for displaying a user interface of an application program or a web page by an electronic device is: generating, based on a drawing material of the application program or downloaded style information of the web page, the user interface for displaying.

A displaying process of an application program is used as an example. When an application program is installed in the electronic device, an image resource file used to display a user interface of the application program is generated in the electronic device. The image resource file includes various information used to generate a preset display interface of the application program, for example, information such as displayed content, a type, a size, and a drawing material of each layer of the preset display interface.

When the application program runs in a foreground of the electronic device, a CPU and/or a GPU in the electronic device performs the following procedure, to display the user interface of the application program.
1. Obtain an image resource file that is of the application program and that is stored in a terminal.
2. Perform drawing processing based on information (such as a drawing material) in the image resource file, to generate a plurality of layers of the user interface of the application program.
3. Perform surfaceflinger processing and HWC processing on the plurality of generated layers, to combine the plurality of layers into one frame of to-be-displayed image.
4. Perform device display processing on the generated to-be-displayed image, and push the generated to-be-displayed image to a display unit of the electronic device for displaying.

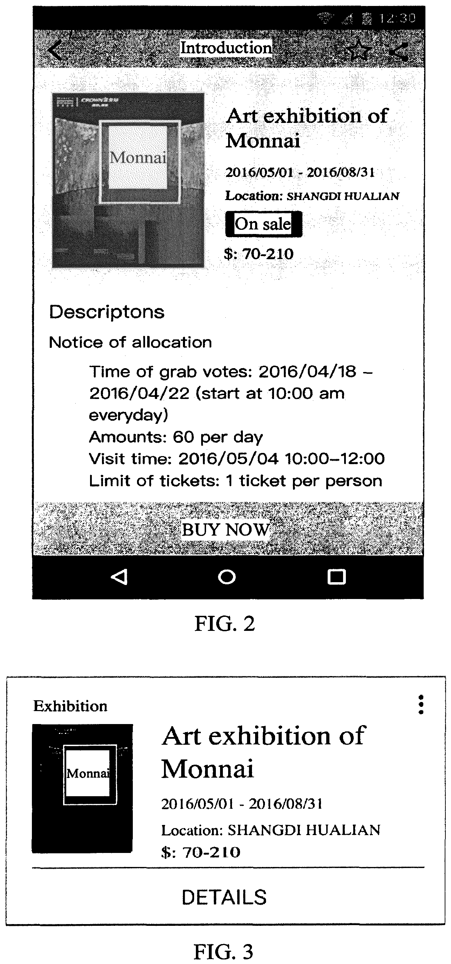

A displaying process of a web page in a browser is further used as an example. When a browser in the electronic device requests to access an address of a web page, the electronic device displays the web page based on a response returned by a server accessing the web page. FIG. 2 is a schematic diagram of a web page displayed in a browser in an electronic device. Using FIG. 2 as an example, when the electronic device runs the browser, the browser requests to access an address of a ticketing website, and sends an access request (for example, an HTTP request) to a web server of the ticketing website. After receiving the access request of the browser, the web server of the ticketing website returns response information to the browser. The browser obtains or caches, based on the received response information, web page style information (for example, HTML, a picture, a CSS style table, and a JavaScript file), then draws page content of a ticketing web page based on the web page style information, obtains an image resource file of the browser, performs drawing processing in combination of information (such as a drawing material) in the image resource file of the browser and downloaded page content of the ticketing web page, to generate and display a plurality of layers of a user interface of the web page, and at last, combines the plurality of layers and sends the plurality of layers to a display. A step of combining and displaying a user interface of the browser is similar to a step of combining and displaying an application program, and details are not described herein again.

The electronic device captures and records a static or dynamic image by using the at least one camera 1150 connected to one or more I/O ports, to generate a picture. Specifically, the camera includes components such as a printed circuit board, a lens, a fixator, a color filter, a digital signal processing chip, and a light-sensitive sensor. An operating principle of photographing by the camera is: An object is photographed by using the lens, a generated optical image is projected to the light-sensitive sensor, then the optical image is converted into an electrical signal, and the electrical signal is converted into a digital signal through analog-to-digital conversion. The digital signal is processed by the digital signal processing chip, then is sent to a mobile phone processor for processing, and finally is converted into an image that can be seen on a mobile phone screen.

Both a picture generated through screen capture and a picture generated through photographing are stored in the memory of the electronic device. A user may view the picture by using a picture reading and displaying application (for example, an image library) in the electronic device. As described above, when a generated picture is used to record information a user wants to record, and when the user wants to search for the information, the user needs to search for the picture for recording the information. In a conventional solution, a user usually needs to manually slides and views massive pictures in an image library. When a generation time of a picture is relatively early, displaying of the picture usually ranks near the bottom, and therefore searching is laborious and time-consuming. Therefore, the embodiments of the present invention provide a picture processing method, to resolve a problem of inconvenience of searching for information recorded in a picture in the prior art. The technical solutions of the embodiments of the present invention are specifically described below by using application scenarios shown in FIG. 2 and FIG. 3 as an example.

FIG. 2 is a schematic diagram of a screenshot of a user interface of a browser. When a screen of an electronic device displays a user interface of a browser shown in FIG. 2, a user sends a screen capture instruction to the electronic device to record information of the user interface. When receiving the screen capture instruction, the electronic device generates, in response to the screen capture instruction, a screenshot shown in FIG. 2, and automatically generates, based on the generated screenshot, an information card shown in FIG. 3.

FIG. 3 shows an information card generated based on the screenshot shown in FIG. 2. As shown in FIG. 3, the information card includes key information in the screenshot shown in FIG. 2. After the information card is generated, the information card may be displayed on one of home screen pages of the electronic device, so that a user can directly see the information card once unlocking the electronic device. Therefore, the user can conveniently view the key information recorded in the screenshot and does not need to search an image library for the original screenshot. Certainly, the information card may alternatively be displayed on another display interface, for example, a lock screen interface or a notification bar interface, of the electronic device. A preset display interface of the information card in the electronic device is not specifically limited herein.

The technical solutions of the present invention are specifically described below by using a plurality of embodiments. First, wording and terms used in the following embodiments are explained.

When ordinal numerals such as "first" and "second" are mentioned in the embodiments of the present invention, the ordinal numerals should be understood as being used only for distinguishing unless indeed indicating a sequence based on context. For example, a "first page" and a "second page" both represent a page in an electronic device, but separately represent different pages in a plurality of pages in the electronic device.

When a "picture generation instruction" is mentioned in some embodiments of the present invention, the picture generation instruction is an instruction entered by a user to instruct an electronic device to generate a picture. The picture generation instruction includes, but is not limited to, one or more of a screen capture instruction, a photographing instruction, a picture receiving instruction, and a picture downloading instruction. There are also a plurality of types of picture generation instructions, including but not limited to a preset gesture, preset voice, touch and hold, touch, and the like. When the user enters a picture generation instruction by using the electronic device, the electronic device generates an information storage picture based on the picture generation instruction. For example, when the electronic device runs an application program and displays a user interface of the application program in a foreground, the user enters a screen capture instruction by using a touchscreen or a physical button of the electronic device. The electronic device receives the screen capture instruction entered by the user, and performs, in response to the screen capture instruction, screen capture on a current user interface displayed on a display screen of the electronic device, to generate a screenshot. For another example, the user enables a camera of the electronic device, and enters a photographing instruction by using a touchscreen or a physical button of the electronic device. The electronic device receives the photographing instruction entered by the user, photographs a current object in response to the photographing instruction, and generates a photo.

When an "information storage picture" is mentioned in some embodiments of the present invention, the information storage picture is a picture generated by an electronic device in response to a picture generation instruction entered by a user. For example, when the picture generation instruction is a screen capture instruction, the information storage picture is a screenshot generated by performing screen capture on a current user interface displayed on the electronic device. The picture generated based on the screen capture instruction may be the entire current user interface displayed on the electronic device, or may be a part of the current user interface displayed on the electronic device. When the picture generation instruction is a photographing instruction, the information storage picture is a photo photographed by the electronic device in response to the photographing instruction. When the picture generation instruction is a picture downloading instruction, the information storage picture is a picture downloaded by the electronic device in response to the picture receiving instruction.

When "first information" is mentioned in some embodiments of the present invention, the first information is information displayed in an information storage picture. Specifically, the first information includes image information, text information, time information, hyperlink information, and the like in a picture. Using FIG. 2 as an example, after an electronic device performs screen capture on a user interface shown in FIG. 2 to generate a screenshot, the screenshot includes a poster picture of "Impressionist Monnai", text description information of an art exhibition "Impressionist Monnai", and a plurality of icons. First information shown in the screenshot includes the poster picture of "Impressionist Monnai", the text description information of the art exhibition "Impressionist Monnai", and the like.

When an "information card" is mentioned in some embodiments of the present invention, the information card is a user interface used to display some information or all information in an information storage picture. In an embodiment, a displaying size of the information card is smaller than a size of a display screen of the electronic device. As shown in FIG. 3, when the electronic device displays the information card, the information card is displayed in a part of an area on the display screen of the electronic device. In an embodiment, the information card only displays some information in the information storage picture. For example, when first information in an information storage picture includes a plurality of images or a plurality of segments of text, an information card generated based on the information storage picture only includes an image and text in the information storage picture that are concerned by a user.

When a "preset display interface" is mentioned in some embodiments of the present invention, the preset display interface may be a home screen page, a lock screen interface, or a notification bar interface of an electronic device, a user interface of a preset application of the electronic device, or the like. Optionally, the preset display interface may be preset at delivery of the electronic device, or may be set by a user. Optionally, a preset display interface of an information card on the electronic device may be set or modified by a user. For example, the information card is preset to be displayed on a home screen page, and the user may set to change the preset display interface of the information card to a lock screen interface.

The home screen page is a page displayed after an electronic device is unlocked. The home screen page of the electronic device includes a control icon, a menu icon, and the like of an application program. The electronic device may have one or more home screen pages, and a quantity of home screen pages of the electronic device may be automatically increased as a quantity of control icons is increased. Certainly, the electronic device may further add or delete a home screen page based on an input instruction of a user. An information card may be displayed on any one of a plurality of home screen pages. For example, the electronic device includes three home screen pages (a screen page 1, a screen page 2, and a screen page 3), and the electronic device enters the home screen page 2 after being unlocked. When a user enters, by using a touchscreen, an action of sliding leftward, the electronic device switches the currently displayed page 2 to the page 1 in response to the action of sliding leftward. When the user enters, by using the touchscreen, an action of sliding rightward, the electronic device switches the currently displayed page 2 to the page 3 in response to the action of sliding rightward. The information card may be located on the home screen page 2, or may be located on the home screen page 1 or the home screen page 3. When the information card is located on the home screen page 2, and after the electronic device is unlocked, the user can see the information card. When the information card is located on the home screen page 1 or 3, and after the electronic device is unlocked, the user first sees the page 2, and needs to perform the action of sliding leftward or the action of sliding rightward to see the information card.

The lock screen interface is a user interface displayed after an electronic device is locked and when a display screen of the electronic device is lit up. The lock screen interface includes a plurality of menu controls (for example, an unlocking module and a clock) or a control icon of an application program (for example, a switch control of a music application program). There may be one or more lock screen interfaces. For example, the electronic device includes three lock screen interfaces (in other words, a lock screen interface 1, a lock screen interface 2, and a lock screen interface 3). The display screen of the electronic device displays the lock screen interface 2 when being lit up. When a lock status of the display screen of the electronic device is maintained, and when a user enters, by using a touchscreen, an action of sliding leftward, the electronic device switches the currently displayed lock screen interface 2 to the lock screen interface 1 in response to the action of sliding leftward. When the user enters, by using the touchscreen, an action of sliding rightward, the electronic device switches the currently displayed lock screen interface 2 to the lock screen interface 3 in response to the action of sliding rightward.

The notification bar interface is a user interface displayed after a notification bar is opened. A user interface of a notification bar is used to display information such as a notification message of an application program, a system time, and a date. The notification bar may be located at the top or bottom of a home screen page of an electronic device. The notification bar is preset to a collapsed state, that is, only some information is displayed at the top or bottom of the home screen page of the electronic device. A user may be continuously in contact with the notification bar in the collapsed state by using a touchscreen and performs an action of pulling downward or an action of sliding upward in a vertical direction, to open the user interface of the notification bar. When the interface of the notification bar is opened, an information card may be directly displayed on the opened user interface of the notification bar, that is, the information card is displayed on the opened user interface of the notification bar together with a notification message and the like. Alternatively, only a display portal of an information card is displayed on the user interface of the notification bar, that is, the display portal of the information card is displayed on the opened user interface of the notification bar together with a notification message. The complete information card is displayed only when the user taps the display portal of the information card.

An example of the user interface of the preset application is as follows. For example, an information card may be displayed on a home page of a calendar application. That is, after a user opens the calendar application, the information card is displayed on a user interface of the home page of the calendar application.

The following describes the technical solutions of the present invention in detail by using specific embodiments. The following specific embodiments may be mutually combined, and same or similar concepts or processes may not be repeatedly described in some embodiments.

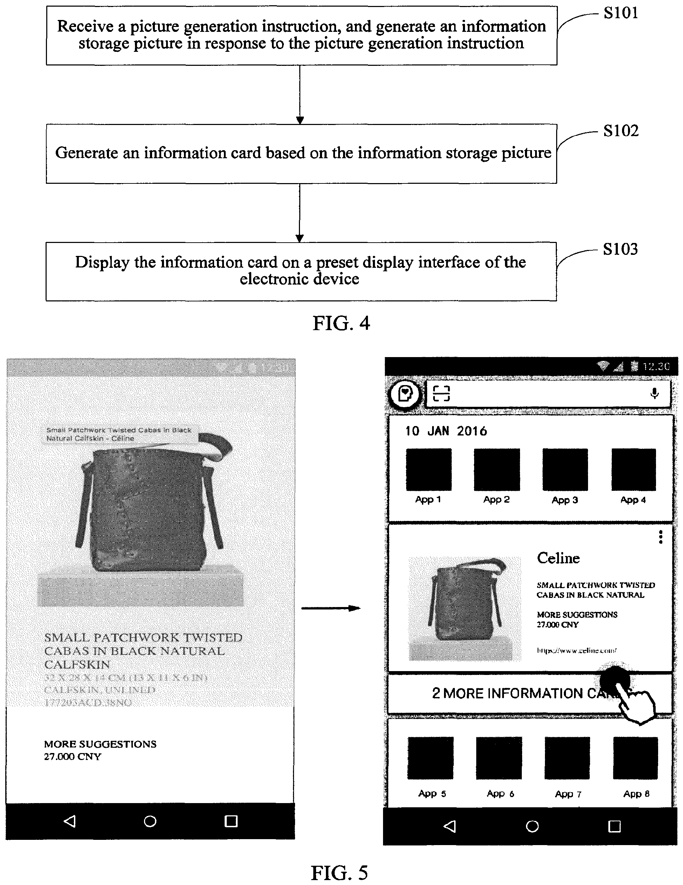

FIG. 4 is a schematic flowchart of a picture processing method according to an embodiment of the present invention. As shown in FIG. 4, the method procedure is performed by an electronic device. Method steps of the process may be performed in sequence or in parallel, and more or fewer method steps may also be included. The method procedure includes the following steps.

S101: Receive a picture generation instruction, and generate an information storage picture in response to the picture generation instruction.

The information storage picture includes first information. The first information is information such as text, a time, an image, a control, and a hyperlink in the information storage picture.

S102: Generate an information card based on the information storage picture.

The information card includes at least some information in the first information of the information storage picture.

S103: Display the information card on a preset display interface of the electronic device.

The technical solution shown in FIG. 4 is specifically described below separately by using screen capture and photographing as an example.

First, the information storage picture is generated through screen capture.

FIG. 5 is a schematic diagram of generating an information card after screen capture is performed on a user interface of a shopping application. As shown in FIG. 5, a user runs a shopping application by using an electronic device. The shopping application includes a plurality of commodities. When exhibiting each commodity, the shopping application displays a user interface including a plurality of types of information about the commodity. If the user finds a leather bag the user is interested in when browsing the commodities by using the shopping application, the user can see first information such as a price, size, and picture of the leather bag on a user interface of the leather bag.

The user wants to record information about the leather bag. Therefore, the user enters a screen capture instruction, to trigger the electronic device to perform screen capture on a current screen interface (the user interface of the shopping application for exhibiting the leather bag). The screen capture instruction includes, but is not limited to, touching and holding a touchscreen, getting in contact with the touchscreen with a knuckle, touching the touchscreen by using a preset gesture (for example, continuously and slightly tapping, or getting in contact with one side of the touchscreen by using a side surface of a palm and continuing to slide to the other side of the touchscreen), pressing a preset physical button (such as a photographing button or a volume button) or a virtual functional button, entering a preset voice instruction, or the like.

After performing, in response to the screen capture instruction entered by the user, screen capture on a user interface displayed on a current screen, the electronic device generates a screenshot. The screenshot includes information such as the price, the size, the picture, and a name of the leather bag.

After the screenshot is generated, the electronic device automatically processes the screenshot, to generate an information card including key information of the leather bag. As shown in FIG. 5, the information card includes information such as the picture, name, and price of the leather bag, and information such as the size of the leather bag is omitted. After being generated, the information card is automatically displayed on a home screen page of the electronic device. The user can directly view the generated information card on the home screen page and does not need to search an image library for the screenshot or open the shopping application to research for the leather bag again.

When the received picture generation instruction is a screen capture instruction, in another embodiment, the user may set that only when screen capture is performed on a user interface of an application program specified by the user and a screenshot is generated, the method procedure shown in FIG. 4 is triggered to generate an information card. For example, only when screen capture is performed on the user interface of the shopping application to generate the screenshot, the method procedure shown in FIG. 4 is triggered to generate the information card.

Specifically, the user enters an information card setting instruction in the electronic device in advance. The electronic device receives and responds to the information card setting instruction, so that when screen capture is performed on a user interface of a first application in the electronic device and an information storage picture is generated, an information card is generated based on the information storage picture. That is, when the electronic device runs the first application and displays the user interface of the first application, if the electronic device receives a screen capture instruction entered by the user, the electronic device performs screen capture on the current user interface of the first application based on the screen capture instruction to generate the information storage picture, and generates the information card based on the information storage picture. When the electronic device runs another application and displays a user interface, if the electronic device receives a screen capture instruction entered by the user, the electronic device performs screen capture on a current user interface, but does not trigger the method procedure shown in FIG. 4, that is, no information card is generated. The user may choose one or more application programs from a plurality of application programs in the electronic device as the first application. For example, the user may set one or more application programs in the shopping application, an instant chat application, or a ticketing application in the electronic device as the first application.

After the user completes setting, and after the electronic device receives the screen capture instruction entered by the user and generates the information storage picture, the electronic device determines whether the information storage picture is generated by performing screen capture on the user interface of the first application. If the information storage picture is generated by performing screen capture on the user interface of the first application, the electronic device generates the information card based on the information storage picture. There are a plurality of methods for determining, by the electronic device, whether the information storage picture is generated by performing screen capture on the user interface of the first application, and a specific determining method is not limited herein. For example, when receiving the screen capture instruction, the electronic device determines whether an application program currently running in a foreground of an operating system belongs to the first application that is set by the user. If the application program currently running in the foreground of the operating system is the first application that is set by the user, an information card is generated. If the application program currently running in the foreground of the operating system is not the first application that is set by the user, no information card is generated, and only a screenshot is generated and stored in the electronic device.

There are a plurality of reasons for performing screen capture on the user interface of the electronic device by the user. The user sets, in advance, that an information card generation operation is triggered only when screen capture is performed on some specified application programs, so that an information card not required by the user is prevented from being generated, thereby improving intelligence of human-electronic-device interaction.

There are a plurality of methods for automatically processing the screenshot by the electronic device to generate the information card, and a specific processing method is not limited herein. A processing process is described below by using an example.

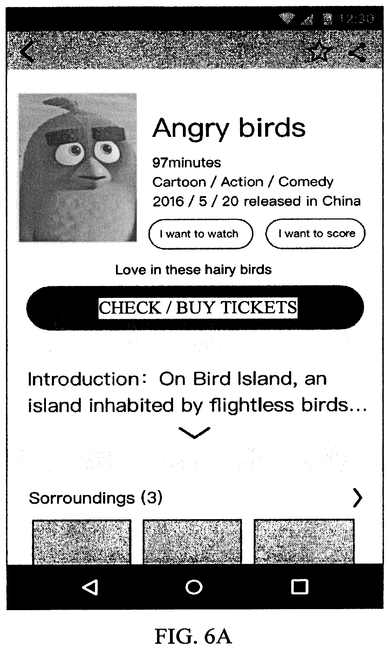

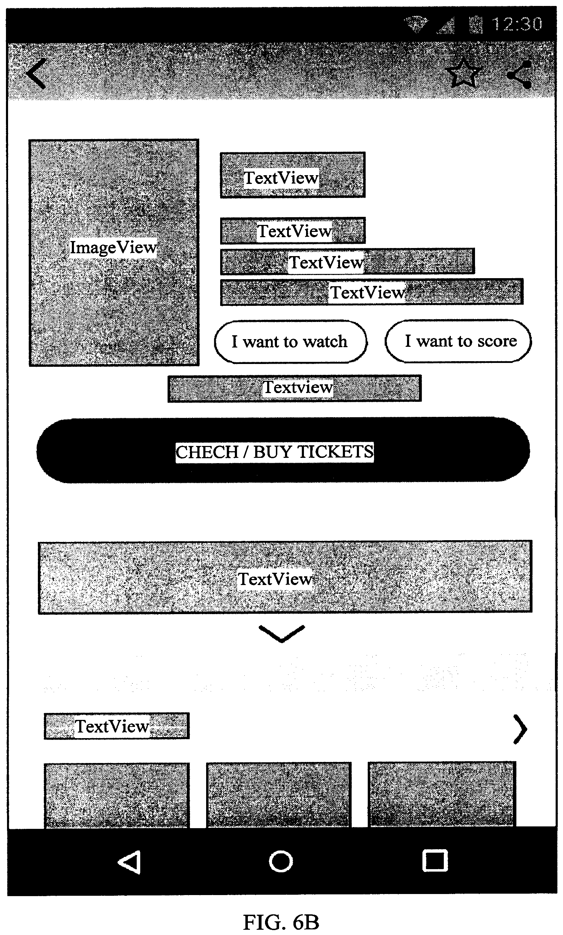

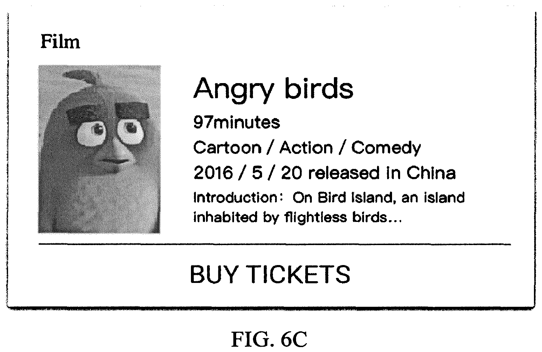

FIG. 6A is a schematic diagram of a screenshot. FIG. 6B is a schematic diagram of layers of the screenshot in FIG. 6A. FIG. 6C is a schematic diagram of an information card generated based on FIG. 6A. As shown in FIG. 6A, a user interface currently displayed on an electronic device is a user interface of a ticketing application in the electronic device. The user interface exhibits ticketing information of a film "Angry birds". The ticketing information includes text information, time information, functional buttons, image information, and the like. The text information includes content such as that film duration is "97 minutes" and a film type is "cartoon/action/comedy", and a plot introduction. The time information includes that a release time is "May 20, 2016". The functional buttons include "I want to watch", "I want to score", and "Check/Buy tickets". After a user taps a functional button, a preset function corresponding to the functional button is performed. For example, after the functional button "Check/Buy tickets" is tapped, a user interface for buying a cinema ticket is displayed. The image information includes a propaganda poster of the film "Angry birds", as shown in the upper left corner of FIG. 6A.

Before the screenshot shown in FIG. 6A is generated, the electronic device has generated a user interface corresponding to the screenshot, that is, the electronic device has generated and displayed a ticketing user interface of the film "Angry birds" in the ticketing application. Therefore, when the electronic device performs screen capture on the user interface, the electronic device may automatically obtain a view layout (view layout) of each layer of the screenshot shown in FIG. 6A, and obtain, through scanning, content of a view (view) of the screenshot shown in FIG. 6A. For example, in an Android system, a layout of layers (from a parent layer to a child layer) may be scanned by using a ViewGroup.getChildAt() method provided in an Android operating system. Different views correspond to different control types. A text view (TextView) control and an image view (ImageView) control in the screenshot shown in FIG. 6A are obtained. As shown in FIG. 6B, content of the TextView control is text information on the ticketing user interface of the film "Angry birds" in the ticketing application, and content of the ImageView control is image information on the ticketing user interface of the film "Angry birds" in the ticketing application.

After the text information and the image information of the screenshot are obtained, text and an image that are required for generating the information card are selected according to a predefined extraction rule. Several predefined extraction rules are described below as an example. However, there are a plurality of predefined extraction rules, and this is not specifically limited in this application.

For the text information, the predefined extraction rule may be set as sorting, when there are a plurality of TextView controls, the plurality of TextView controls based on a word size and font weight of text in the TextView controls. Then, text in a TextView control having a largest word size and boldest font is selected as text to be displayed in the information card. Optionally, for the text in the Text View control having the largest word size and boldest font or text in an only TextView control, key word information of the text in the TextView control is further extracted based on a semantic analysis technology as the text to be displayed in the information card.

Alternatively, when there are a plurality of TextView controls, content of text in the TextView controls is analyzed based on a semantic analysis technology, to extract a TextView control having a preset key word. Then, text in the TextView control having the preset key word is used as text to be displayed in the information card. The preset key word may be set before delivery of the electronic device, or may be set by the user. The preset key word may include, but is not limited to, a time, a price, and the like.

For the image information, the predefined extraction rule may be set as obtaining, when there is only one Image View control, an image in the Image View control as an image to be displayed in the information card; or obtaining, when there are a plurality of ImageView controls, an image in an ImageView control having a largest image size/pixel as an image to be displayed in the information card.

The selected text in the TextView control and the selected image in the ImageView control are combined to generate the information card, and the information card is displayed on a home screen page of the electronic device.

After obtaining key information in the screenshot shown in FIG. 6A, the electronic device generates the information card shown in FIG. 6C, and displays the information card on a preset display interface such as the home screen page, a lock screen interface, or a notification bar interface of the electronic device.

Optionally, file attribute information of the screenshot may further be selected from the screenshot according to a preset rule. For example, the file attribute information includes a generation time of the screenshot and an application program corresponding to the screenshot.

In another embodiment, if the information card is generated based on the screenshot, the information card further includes a startup control. The startup control is used to start an application program corresponding to the screenshot. For example, the information card shown in FIG. 6C further includes a startup control of "BUY TICKETS". When the user taps the control, the electronic device directly starts the ticketing application corresponding to the screenshot shown in FIG. 6A. The user does not need to search a plurality of application programs of the electronic device for the ticketing application, open the ticketing application, or research for a ticketing page of the film "Angry birds" again, thereby improving the intelligence of human-electronic-device interaction.

Second, the information storage picture is generated through photographing.

FIG. 7 is a schematic diagram of generating an information card based on a photographed photo. As shown in FIG. 7, a user sees a propaganda poster of a concert of a singer during shopping, and the user wants to record information such as a time, place, and price of the concert. Therefore, the user directly photographs the propaganda poster by using a mobile phone to generate a photo, and stores the photo in the mobile phone. The photo generated through photographing is the information storage picture.

For a picture generated through photographing or a picture downloaded from a network, preprocessing (for example, image correction and denoising) is first performed on the picture. Then, text in the picture is recognized by using a picture text recognition technology (for example, optical character recognition (Optical Character Recognition, OCR for short)), and an image such as a person, a scene, or an object in the picture is recognized by using a picture recognition technology. The text in the picture is characterized by that a text color is usually a pure color, sizes are basically uniform, there is relatively strong contrast to a background color, there is an intense edge rectangular frame, and the like. The image (for example, a person, an object, or a scene) is characterized by that there is regionality, an entire area in the picture is occupied, and the like. A text recognition method and an image recognition method in the picture are the prior art. For a specific recognition method, refer to US 7062073 B1. This is not limited herein.

As shown in FIG. 7, text information recognized by using the OCR technology in FIG. 7 includes a "show time", a "show place", a "show fare", and a singer recognized by using a facial recognition technology in the picture.

After the text information and the image in the picture are obtained, text and a picture that are required for generating the information card are selected according to a predefined extraction rule. Several predefined extraction rules are described below as an example. However, there are a plurality of predefined extraction rules, and this is not specifically limited in this application.

For the text information that is segmented and recognized from the picture, the predefined extraction rule may be set as extracting text having a largest word size and a boldest font as text to be displayed in the information card, or may be set as using text including a preset key word (for example, a time key word or a place key word) as text to be displayed in the information card.

For image information that is segmented and recognized from the picture, the predefined extraction rule may be set as extracting a character image as a picture to be displayed in the information card. Alternatively, the predefined extraction rule may be set as using a thumbnail of the entire picture as a picture to be displayed in the information card.

Optionally, in a process of generating a photo, the electronic device records file attribute information of the photo. For example, if the photo is photographed by the electronic device, the file attribute information includes a generation time of the photo, photographing location information of the photo, and the like. The predefined extraction rule may be set as extracting the generation time of the photo.

One or more pieces of information such as the selected text, image, and file attribute information are combined to generate the information card. Finally, the information card is displayed on a preset display interface such as a home screen page, a lock screen interface, or a notification bar interface of the electronic device.

Optionally, the information card may further include a display portal of the original photo. As shown in FIG. 7, the information card generated based on the photo may further include "Details". When the user taps "Details", the original photo corresponding to the information card is displayed.

In this technical solution in this embodiment of the present invention, when receiving the picture generation instruction, the electronic device generates the information card based on the generated information storage picture and displays the information card on the preset display interface, so that the user can directly view key information in the information storage picture by using the preset display interface of the electronic device and does not need to search an image library for the picture, thereby improving convenience of viewing information by the user.

Optionally, after the electronic device generates the information storage picture based on the picture generation instruction in step S101, information card generation prompt information is displayed on the user interface of the electronic device. The information card generation prompt information is used to inquire the user whether to allow the electronic device to generate the information card based on the information storage picture. There are a plurality of manners of displaying the information card generation prompt information. For example, a message dialog box is displayed at the top or bottom of the preset display interface of the electronic device; or a functional button for generating the information card is displayed in a menu of the picture. When the user enters an instruction for allowing generating the information card for the information storage picture, the electronic device performs step S102 and step S103 in response to the instruction. If the user enters an instruction for rejecting to generate the information card for the information storage picture, or does not enter, in a preset time period, an instruction for allowing generating the information card for the information storage picture, the electronic device no longer performs step S102 and step S103.

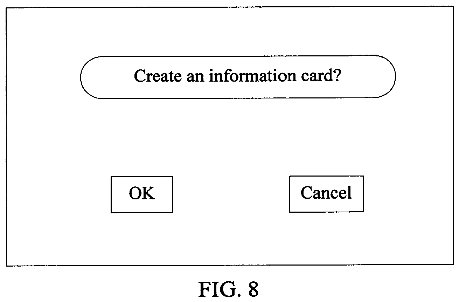

FIG. 8 is a schematic diagram of information card generation prompt information. For example, after a user enters a screen capture instruction and an electronic device generates a screenshot in response to the screen capture instruction, a message box shown in FIG. 8 is displayed to inquire the user whether to agree to generate an information card. If the user taps an agreement button, an information card is generated based on the screenshot. If the user taps a rejection button, no information card is generated based on the screenshot.

There are lots of reasons for generating a picture by the user by using the electronic device. Therefore, an information card is generated, based on a selection of the user, for a picture required by the user, to improve the intelligence of human-electronic-device interaction.

Optionally, if the information storage picture is deleted by the user, the information card corresponding to the information storage picture is also automatically deleted.

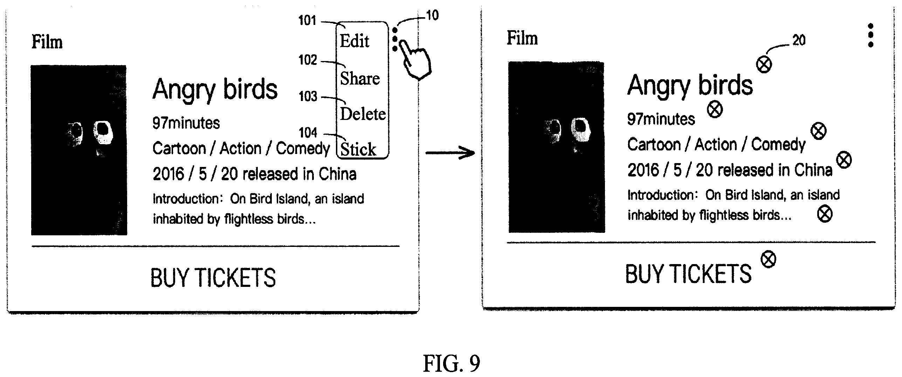

FIG. 9 is a schematic diagram of setting an information card to an editable state. As shown in FIG. 9, after an information card is generated, a menu icon 10 represented by three vertically arranged points is displayed in the upper right corner of the information card. After a user taps the menu icon, four functional buttons are displayed: "edit" 101, "share" 102, "delete" 103, and "stick" 104. The four functional buttons shown in FIG. 9 are merely an example. Persons skilled in the art may learn that a menu may alternatively include more or fewer functional buttons, or may include another functional button. When the user taps the "edit" button 101, the information card is set to an editable state shown in FIG. 9. The editable state shown in FIG. 9 is merely an example. A displaying style of a user interface when the information card is in the editable state is not specifically limited herein. As shown in FIG. 9, a symbol "⊗" is displayed in the upper right corner of each piece of information in the information card, to indicate that information in the information card is in the editable state.

Information displayed in the information card may be information extracted from the information storage picture according to a preset extraction rule, or may include all information in the information storage picture. After the information card is generated, if the information in the information card does not match information required by the user, the user is allowed to perform an editing operation on the information in the information card. Specifically, the editing operation includes copy, modification, deletion, and the like.

Optionally, when the information card is generated, the electronic device may display information card editing prompt information on the current user interface, to inform the user that the information in the information card is allowed to be edited by the user. When the user agrees to edit the information in the information card, the information in the information card is set to an editable state, to help the user perform the editing operation on the information in the information card.

Optionally, when the information card is generated, the electronic device directly displays that the information card is in an editable state. When the information card is generated in step S103, the information in the information card is directly in the editable state. There are a plurality of editable states, and this is not specifically limited herein. As an example, a state shown in FIG. 9 is an editable state, that is, the user may directly tap the symbol "⊗" above a piece of information, to delete the piece of information. Text in the information card is also allowed to be edited and modified.

Optionally, after the information card is generated, and when the user needs to edit the information card after a period of time, the information card is allowed to be edited. The user enters an information card editing instruction (for example, touching and holding to-be-edited information or selecting an editing functional button from a menu), and the electronic device sets the information in the information card to an editable state in response to the information card editing instruction.

The information in the information card is allowed to be edited by the user, so that the user can further modify the information in the information card based on a requirement of the user, thereby improving the intelligence of human-electronic-device interaction.

After the user completes editing, an edited information card is displayed on the preset display interface of the electronic device.

As shown in FIG. 9, when the user taps the "share" functional button 102, the information card may be sent to another user by using a plurality of communications applications. For example, after a user A buys two film tickets by using a ticketing application of an electronic device, an information card including the film information is generated through screen capture. The user A taps the "share" functional button 102 in the information card, and the information card may be sent to a user B by using an email. After the user B receives the information card by using the email, an electronic device automatically recognizes the information card included in the email, and automatically displays the information card on a home screen of the electronic device of the user B.

As shown in FIG. 9, when the user taps the "delete" functional button 103, the information card is deleted.

As shown in FIG. 9, when the user taps the "stick" functional button 104, the information card keeps being displayed on the preset display interface of the electronic device. Even if the electronic device subsequently generates another new information card, the another information card does not replace the stuck information card to be displayed on the preset display interface. The preset display interface displays a display portal of the another information card. Alternatively, when the preset display interface of the electronic device displays an information card A, if an information card B is set by the user to be stuck, the information card B replaces the information card A to be displayed on the preset display interface of the electronic device.

A plurality of functional buttons are provided in the information card, so as to meet a plurality of operation requirements of the user on the information card.

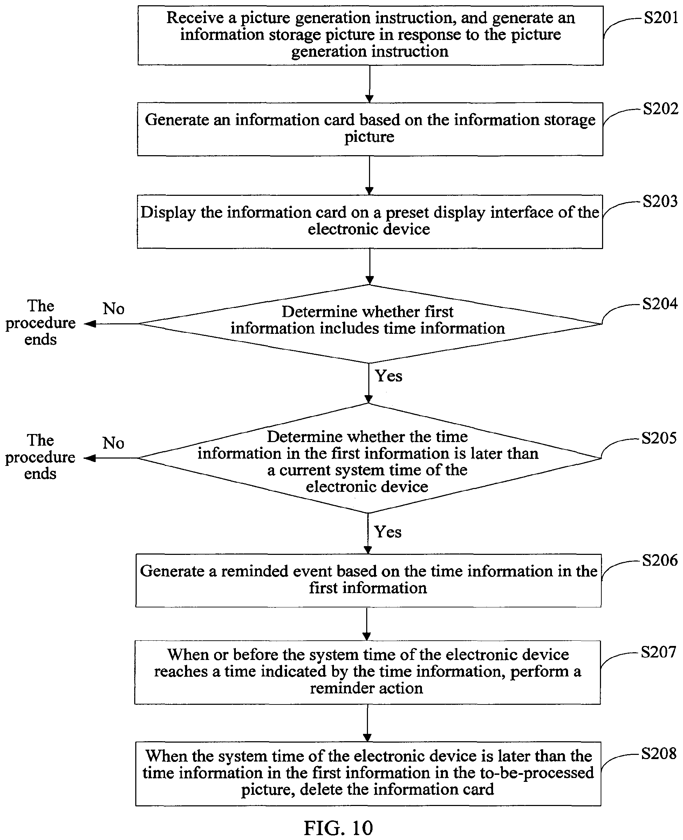

FIG. 10 is a schematic flowchart of another picture processing method according to an embodiment of the present invention. As shown in FIG. 10, details of a step in FIG. 10 that has same content as that in FIG. 4 are not described herein again. After step S203, a step of generating a reminded event is further included. The method step of generating a reminded event may be performed in sequence or in parallel, and more or fewer method steps may also be included. The method procedure includes the following steps.

S201: Receive a picture generation instruction, and generate an information storage picture in response to the picture generation instruction.

S202: Generate an information card based on the information storage picture.

S203: Display the information card on a preset display interface of the electronic device.

S204: Determine whether first information includes time information; and if the first information does not include the time information, directly generate the information card based on the first information, where the information card is used to exhibit key information in the information storage picture; or if the first information includes the time information, perform step S205.

S205: Determine whether the time information in the first information is later than a current system time of the electronic device; and if a time indicated by the time information in the first information is before the current system time of the electronic device, directly generate the information card based on the first information, where the information card is used to exhibit key information in the information storage picture; or if a time indicated by the time information in the first information is later than the current system time of the electronic device, perform step S206.

S206: Generate a reminded event based on the time information in the first information.

The reminded event means generating a reminder action when or before the system time of the electronic device reaches the time indicated by the time information.

S207: When or before the system time of the electronic device reaches the time indicated by the time information, perform a reminder action.

The reminder action includes at least one of the following actions: vibration, screen light-up, prompt information displaying, and ringing.

When the information card includes the time information, and the time indicated by the time information is later than the current system time of the electronic device, the reminded event is generated based on the time information. When the information card does not include the time information, or the time indicated by the time information is before the current system time of the electronic device, only the information card is generated. For example, a start time of an exhibition that is included in the information card shown in FIG. 3 is May 01, 2016. The information card informs, through vibration, sound, screen light-up, or the like on May 01, 2016 or a day before May 01, 2016, the user that the exhibition is going to start, so as to prevent the user from forgetting to participate in the exhibition. An information meaning in the information card is analyzed by using a voice analytics technology, so as to set the reminded event of the information card as a conference reminder, a dating reminder, or a task reminder.

After step S207, the method shown in FIG. 10 further includes the following step:

S208: When the system time of the electronic device is later than the time information in the first information in the information storage picture, delete the information card.

After the electronic device completes performing the reminder action, information in the information card is already expired or to be expired. Therefore, after the system time of the electronic device exceeds the time indicated by the time information in the first information, it indicates that the information in the information card is already expired. The information card may be deleted when the system time of the electronic device exceeds the time indicated by the time information in the first information or when the system time of the electronic device exceeds a preset time period indicated by the time information in the first information.

For example, an end time of the exhibition in the information card shown in FIG. 3 is August 31, 2016. The information card is automatically deleted on September 01, 2016 or September 02, 2016.

An expired information card is automatically deleted, to prevent the expired information card from continuing to occupy a home screen page of the electronic device, thereby improving intelligence of human-electronic-device interaction.

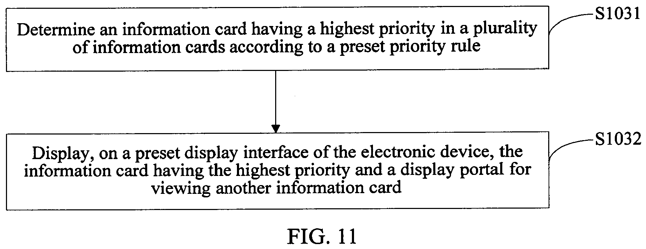

FIG. 11 is a schematic flowchart of an information card displaying method according to an embodiment of the present invention. As shown in FIG. 11, when an electronic device includes a plurality of information cards, step S103 in FIG. 4 includes the following steps. The following method steps may be performed in sequence or in parallel, and more or fewer method steps may also be included. The method procedure includes the following steps.

Step S1031: Determine an information card having a highest priority in the plurality of information cards according to a preset priority rule.

The preset priority rule includes an importance priority and/or a time priority. The importance priority is used to indicate an importance level of information in an information card. The importance priority may be preset in the electronic device in advance, or may be set by a user. For example, the user may set that an importance priority of an information card including a reminded event is higher than that of an information card not including a reminded event. Alternatively, the user may set that information cards generated for screenshots of user interfaces of some application programs have a relatively high importance priority. For example, the user may set that an information card generated for a screenshot of a ticketing application has a highest importance priority.

The time priority is used to indicate a priority that is of an information card and that is determined based on a generation time of the information card. The time priority may be preset in the electronic device in advance, or may be set by a user. For example, the user may set that a priority of an information card whose generation time is relatively late (that is, the generation time is relatively close to a current system time of the electronic device) is higher than that of an information card whose generation time is relatively early (that is, the generation time is relatively far away from the current system time of the electronic device).

The preset priority rule may include at least one of the importance priority and the time priority. For example, the preset priority rule is that an importance priority of an information card including a reminded event is higher than that of an information card not including a reminded event, and a priority of an information card whose generation time is relatively late is higher than that of an information card whose generation time is relatively early.

Step S1032: Display, on a preset display interface of the electronic device, the information card having the highest priority and a display portal for viewing another information card.

The display portal of the another information card may alternatively not be displayed on the preset display interface of the electronic device.

The method for displaying a plurality of information cards that is shown in FIG. 11 is described below by using an example.

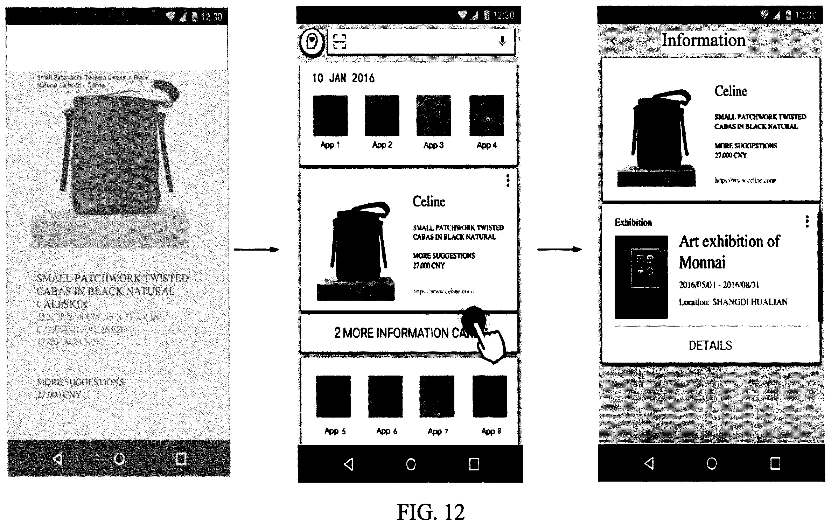

FIG. 12 is a schematic diagram of a user interface when a plurality of information cards are displayed. An electronic device has included an information card of an art exhibition shown in FIG. 3 and displayed the information card on a preset display interface. A preset priority rule in the electronic device is that a priority of an information card whose generation time is relatively late is higher than that of an information card whose generation time is relatively early. As shown in FIG. 12, when a user performs screen capture on a user interface of a leather bag in a shopping application program, a screenshot of the leather bag is generated and an information card is generated. The information card is in an editable state, and the user may edit or delete the information card. If the user determines to generate the information card of the leather bag, because a generation time of the information card is the latest, a priority of the information card is the highest. The newly generated screenshot of the leather bag replaces the original information card of the art exhibition to be displayed on a preset display interface of the electronic device, and a display portal of the information card of the art exhibition is displayed on the preset display interface of the electronic device. After tapping the display portal, the user may see the original information card of the art exhibition. When the electronic device includes a plurality of information cards, the electronic device sorts the information cards based on a generation time of each information card, and displays an information card whose generation time is the latest on the preset display interface of the electronic device as an information card whose time priority is the highest.

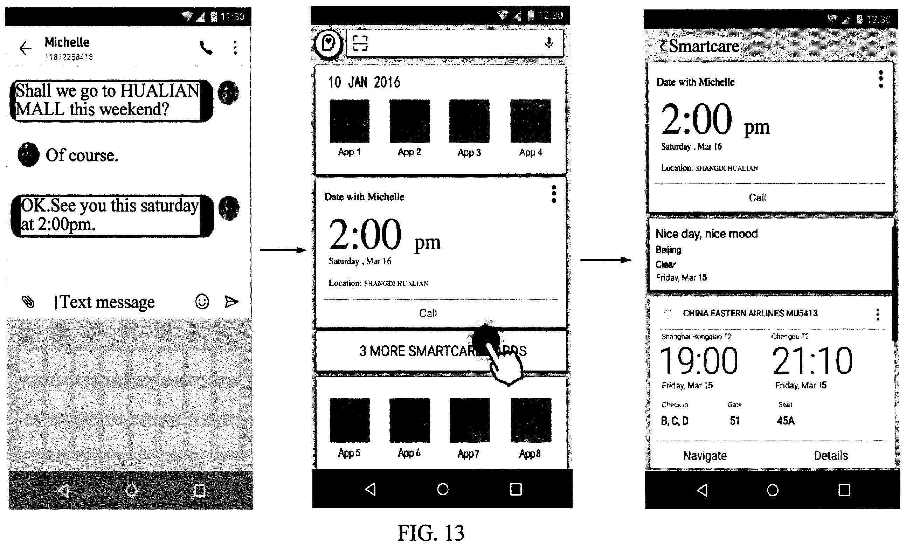

FIG. 13 is a schematic diagram of another user interface when a plurality of information cards are displayed. As shown in FIG. 13, a user performs screen capture on a chat user interface of an instant chat application to generate a screenshot, and an information card is generated. The screenshot includes time information. Therefore, an electronic device generates a reminded event based on the time information. A preset priority rule is that a priority of an information card including a reminded event is higher than that of an information card not including a reminded event, and a priority of an information card whose generation time is relatively late is higher than that of an information card whose generation time is relatively early. According to the preset priority rule, the generated information card corresponding to the chat user interface has a latest generation time and includes the reminded event. Therefore, the information card has a highest priority. The information card of the chat interface is displayed on a preset display interface of the electronic device, and a display portal of another information card is displayed.

When the electronic device stores the plurality of information cards, the information card having the highest priority is displayed on the preset display interface, so that the user can conveniently view most important information.

An embodiment of the present invention further provides a picture processing apparatus. FIG. 14 is a schematic structural diagram of a picture processing apparatus according to an embodiment of the present invention. As shown in FIG. 14, the picture processing apparatus includes a receiving module, a processing module, and a display module.

The receiving module is configured to receive a picture generation instruction. The processing module is configured to generate an information storage picture in response to the picture generation instruction received by the receiving module. The information storage picture includes first information. The processing module generates an information card based on the information storage picture. The information card includes at least some information in the first information. The processing module instructs the display module to display the information card on a preset display interface of the electronic device. The display module is configured to display the information card on the preset display interface of the electronic device.

Optionally, the picture generation instruction includes a screen capture instruction or a photographing instruction.

In another embodiment, the processing module is further configured to generate information card generation prompt information. The information card generation prompt information is used to inquire whether the information card is allowed to be generated based on the information storage picture. The display module is further configured to display the information card generation prompt information. The receiving module is further configured to receive an agreement instruction or a rejection instruction that is entered by a user based on the information card generation prompt information. The processing module generates the information card based on the agreement instruction entered by the user that is received by the receiving module. If the receiving module receives the rejection instruction entered by the user, the processing module no longer generates the information card based on the information storage picture.

In another embodiment, the processing module is further configured to generate information card editing prompt information. The information card editing prompt information is used to inform that information in the information card is allowed to be edited by the user. The display module is further configured to display the information card editing prompt information. The receiving module is further configured to receive an editing instruction, a deletion instruction, or a copy instruction that is entered by the user based on the information card editing prompt information. The processing module is further configured to edit, delete, or copy the information in the information card based on the editing instruction, the deletion instruction, or the copy instruction that is received by the receiving module. The display module is further configured to display an edited information card.

In another embodiment, the processing module is further configured to set information in the information card to an editable state. The display module is further configured to display the information card in the editable state. The receiving module is further configured to receive an editing instruction, a deletion instruction, or a copy instruction that is entered by the user. The processing module is further configured to edit, delete, or copy the information in the information card based on the editing instruction, the deletion instruction, or the copy instruction that is received by the receiving module. The display module is further configured to display an edited information card.

In another embodiment, the receiving module is further configured to receive an information card editing instruction entered by the user. The processing module is further configured to set information in the information card to an editable state in response to the information card editing instruction.

In another embodiment, the processing module is further configured to determine whether the first information includes time information. If the first information includes the time information, the processing module generates a reminded event based on the time information in the first information. The reminded event is generating a reminder action when or before a system time of the electronic device reaches a time indicated by the time information. The reminder action includes at least one of the following actions: vibration, screen light-up, prompt information displaying, and ringing.

Optionally, the processing module is further configured to determine whether the time information in the first information is later than the system time of the electronic device. If the time indicated by the time information in the first information is later than the system time of the electronic device, the processing module generates the reminded event based on the time information in the first information.

Optionally, the processing module is further configured to: when the system time of the electronic device is later than the time indicated by the time information in the first information, delete the information card.

In another embodiment, when there are a plurality of the information cards, the processing module is further configured to determine, according to a preset priority rule, an information card having a highest priority in the plurality of the information cards. The preset priority rule includes an importance priority and/or a time priority. The processing module is further configured to instruct the display module to display the information card having the highest priority on the preset display interface of the electronic device. The display module is further configured to display the information card having the highest priority on the preset display interface of the electronic device.

Optionally, the display module is further configured to display, on the preset display interface of the electronic device, the information card having the highest priority and a display portal for viewing another information card.

In another embodiment, the receiving module is further configured to receive an information card setting instruction. The information card setting instruction is used to set to generate the information card based on the information storage picture when screen capture is performed on a user interface of a first application in the electronic device to generate the information storage picture.

The processing module is further configured to determine whether the information storage picture is a picture generated by performing screen capture on the user interface of the first application. If the information storage picture is the picture generated by performing screen capture on the user interface of the first application, the processing module generates the information card based on the information storage picture.

The picture processing apparatus is configured to perform the method procedures in FIG. 2 to FIG. 13 and/or configured to perform another process in a technology described in this application. For brevity of description, details are not described herein again.

In the several embodiments provided in the present invention, it should be understood that the disclosed apparatus and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate. For example, the receiving module and the display module may be integrated into a same device. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, a network device, or the like) or a processor (processor) to perform some steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or a compact disc.

It may be clearly understood by persons skilled in the art that, for the purpose of convenient and brief description, division of the foregoing functional modules is taken as an example for illustration. During actual application, the foregoing functions can be allocated to different functional modules and implemented according to a requirement, that is, an inner structure of the apparatus is divided into different functional modules to implement some or all of the functions described above. For a specific working process of the foregoing apparatus, refer to a corresponding process in the foregoing method embodiments. The specific working process of the apparatus has a corresponding technical effect in the foregoing method embodiments, and details are not described herein again.

An embodiment of the present invention further provides an electronic device. The electronic device has a structure shown in FIG. 1A. A touchscreen, a processor, and a display of the electronic device are separately configured as follows.

The touchscreen is configured to receive a picture generation instruction. The processor is configured to generate an information storage picture in response to the picture generation instruction received by the receiving module. The information storage picture includes first information. The processor generates an information card based on the information storage picture. The information card includes at least some information in the first information. The processor instructs the display to display the information card on a preset display interface of the electronic device. The display is configured to display the information card on the preset display interface of the electronic device.

Optionally, the picture generation instruction includes a screen capture instruction or a photographing instruction.

Optionally, the processor is further configured to generate information card generation prompt information. The information card generation prompt information is used to inquire whether the information card is allowed to be generated based on the information storage picture. The display is further configured to display the information card generation prompt information. The touchscreen is further configured to receive an agreement instruction or a rejection instruction that is entered by a user based on the information card generation prompt information. The processor generates the information card based on the agreement instruction entered by the user that is received by the touchscreen. If the touchscreen receives the rejection instruction entered by the user, the processor no longer generates the information card based on the information storage picture.

In another embodiment, the processor is further configured to generate information card editing prompt information. The information card editing prompt information is used to inform that information in the information card is allowed to be edited by the user. The display is further configured to display the information card editing prompt information. The touchscreen is further configured to receive an editing instruction, a deletion instruction, or a copy instruction that is entered by the user based on the information card editing prompt information. The processor is further configured to edit, delete, or copy the information in the information card based on the editing instruction, the deletion instruction, or the copy instruction that is received by the touchscreen. The display is further configured to display an edited information card.

In another embodiment, the processor is further configured to set information in the information card to an editable state. The display is further configured to display the information card in the editable state. The touchscreen is further configured to receive an editing instruction, a deletion instruction, or a copy instruction that is entered by the user. The processor is further configured to edit, delete, or copy the information in the information card based on the editing instruction, the deletion instruction, or the copy instruction that is received by the touchscreen. The display is further configured to display an edited information card.

In another embodiment, the touchscreen is further configured to receive an information card editing instruction entered by the user. The processor is further configured to set information in the information card to an editable state in response to the information card editing instruction.

In another embodiment, the processor is further configured to determine whether the first information includes time information. If the first information includes the time information, the processor generates a reminded event based on the time information in the first information. The reminded event is generating a reminder action when or before a system time of the electronic device reaches a time indicated by the time information. The reminder action includes at least one of the following actions: vibration, screen light-up, prompt information displaying, and ringing.

Optionally, the processor is further configured to determine whether the time information in the first information is later than the system time of the electronic device. If the time indicated by the time information in the first information is later than the system time of the electronic device, the processor generates the reminded event based on the time information in the first information.

Optionally, the processor is further configured to: when the system time of the electronic device is later than the time indicated by the time information in the first information, delete the information card.

In another embodiment, when there are a plurality of the information cards, the processor is further configured to determine, according to a preset priority rule, an information card having a highest priority in the plurality of the information cards. The preset priority rule includes an importance priority and/or a time priority. The processor is further configured to instruct the display to display the information card having the highest priority on the preset display interface of the electronic device. The display is further configured to display the information card having the highest priority on the preset display interface of the electronic device.

Optionally, the display is further configured to display, on the preset display interface of the electronic device, the information card having the highest priority and a display portal for viewing another information card.

In another embodiment, the touchscreen is further configured to receive an information card setting instruction. The information card setting instruction is used to set to generate the information card based on the information storage picture when screen capture is performed on a user interface of a first application in the electronic device to generate the information storage picture.

The processor is further configured to determine whether the information storage picture is a picture generated by performing screen capture on the user interface of the first application. If the information storage picture is the picture generated by performing screen capture on the user interface of the first application, the processor generates the information card based on the information storage picture.

The electronic device is configured to perform the method procedures in FIG. 2 to FIG. 13 and/or configured to perform another process in a technology described in this application, and has a corresponding technical effect in the foregoing method embodiments. For brevity of description, details are not described herein again.

It should be noted that the electronic device herein is merely a simplified design. The term "processor" herein may be an application-specific integrated circuit (Application Specific Integrated Circuit, "ASIC" for short), an electronic circuit, a processor (for example, a shared processor, a dedicated processor, or a packet processor) configured to execute one or more software or firmware programs and a memory, a combined logic circuit, and/or another suitable component supporting the described functions. In an optional example, persons skilled in the art may understand that the electronic device may be configured to perform each procedure and/or step in the foregoing method embodiments. To avoid repetition, details are not described herein again.

In an implementation process, the steps in the foregoing method embodiments may be implemented by using a hardware integrated logic circuit in the electronic device, or by using instructions in a form of software. The steps of the methods disclosed with reference to the embodiments of the present invention may be directly performed and completed by using a hardware processor, or may be performed and completed by using a combination of hardware and software modules in the processor. The software module may be located in a mature storage medium in the art, such as a random access memory, a flash memory, a read-only memory, a programmable read-only memory, an electrically-erasable programmable memory, or a register. The storage medium may be a memory, and the processor reads information in the memory and completes the steps in the foregoing methods in combination with hardware of the processor. To avoid repetition, details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A picture processing method, wherein the picture processing method is applied to an electronic device and comprises:
receiving a picture generation instruction, and generating an information storage picture in response to the picture generation instruction, wherein the information storage picture comprises first information;
generating an information card based on the information storage picture, wherein the information card comprises at least some information in the first information; and
displaying the information card on a preset display interface of the electronic device.

2. The method according to claim 1, wherein the picture generation instruction comprises a screen capture instruction or a photographing instruction.

3. The method according to claim 1 or 2, wherein before the generating an information card based on the information storage picture, the method further comprises:
displaying information card generation prompt information, wherein the information card generation prompt information is used to inquire whether the information card is allowed to be generated based on the information storage picture.

4. The method according to any one of claims 1 to 3, wherein after the generating an information card based on the information storage picture, the method further comprises:
displaying information card editing prompt information, wherein the information card editing prompt information is used to inform that information in the information card is allowed to be edited by a user; or
that information in the information card is in an editable state; or
receiving an information card editing instruction entered by a user, and setting information in the information card to an editable state in response to the information card editing instruction; and
the displaying the information card on a preset display interface of the electronic device comprises:
displaying an edited information card on the preset display interface of the electronic device.

5. The method according to any one of claims 1 to 4, wherein the method further comprises:
determining whether the first information comprises time information; and
if the first information comprises the time information, generating a reminded event based on the time information in the first information, wherein the reminded event is generating a reminder action when or before a system time of the electronic device reaches a time indicated by the time information, and the reminder action comprises at least one of the following actions: vibration, screen light-up, prompt information displaying, and ringing.

6. The method according to claim 5, wherein the generating a reminded event based on the time information in the first information comprises:
determining whether the time information in the first information is later than the system time of the electronic device; and
if the time indicated by the time information in the first information is later than the system time of the electronic device, generating the reminded event based on the time information in the first information.

7. The method according to claim 5 or 6, wherein after the generating the reminded event, the method further comprises:
when the system time of the electronic device is later than the time indicated by the time information in the first information, deleting the information card.

8. The method according to any one of claims 1 to 7, wherein when there are a plurality of the information cards, the displaying the information card on a preset display interface of the electronic device comprises:
determining, according to a preset priority rule, an information card having a highest priority in the plurality of the information cards, wherein the preset priority rule comprises an importance priority and/or a time priority; and
displaying the information card having the highest priority on the preset display interface of the electronic device; or
displaying, on the preset display interface of the electronic device, the information card having the highest priority and a display portal for viewing another information card.

9. The method according to any one of claims 1 to 8, wherein before the receiving a picture generation instruction, and generating an information storage picture in response to the picture generation instruction, the method further comprises:
receiving an information card setting instruction, wherein the information card setting instruction is used to set to generate the information card based on the information storage picture when screen capture is performed on a user interface of a first application in the electronic device to generate the information storage picture; and
the generating an information card based on the information storage picture comprises:
determining whether the information storage picture is a picture generated by performing screen capture on the user interface of the first application; and
if the information storage picture is the picture generated by performing screen capture on the user interface of the first application, generating the information card based on the information storage picture.

10. The method according to any one of claims 1 to 9, wherein the preset display interface comprises a home screen page, a lock screen interface, or a notification bar interface.

11. The method according to any one of claims 1 to 10, wherein the first information comprises at least one of image information, text information, the time information, and hyperlink information.

12. A picture processing apparatus, comprising:
a receiving module, configured to receive a picture generation instruction;
a processing module, configured to: generate an information storage picture in response to the picture generation instruction received by the receiving module, wherein the information storage picture comprises first information; generate an information card based on the information storage picture, wherein the information card comprises at least some information in the first information; and instruct a display module to display the information card on a preset display interface of the electronic device; and
the display module, configured to display the information card on the preset display interface of the electronic device.

13. The apparatus according to claim 12, wherein the picture generation instruction comprises a screen capture instruction or a photographing instruction.

14. The apparatus according to claim 12 or 13, wherein the preset display interface comprises a home screen page, a lock screen interface, or a notification bar interface.

15. An electronic device, comprising:
a touchscreen, configured to receive a picture generation instruction;
a processor, configured to: generate an information storage picture in response to the picture generation instruction received by the receiving module, wherein the information storage picture comprises first information; generate an information card based on the information storage picture, wherein the information card comprises at least some information in the first information; and instruct a display to display the information card on a preset display interface of the electronic device; and
the display, configured to display the information card on the preset display interface of the electronic device.

16. The electronic device according to claim 15, wherein the picture generation instruction comprises a screen capture instruction or a photographing instruction.

17. The electronic device according to claim 15 or 16, wherein the processor is further configured to:
generate information card generation prompt information, wherein the information card generation prompt information is used to inquire whether the information card is allowed to be generated based on the information storage picture; and
the display is further configured to display the information card generation prompt information.

18. The electronic device according to any one of claims 15 to 17, wherein the processor is further configured to:
generate information card editing prompt information, wherein the information card editing prompt information is used to inform that information in the information card is allowed to be edited by a user; and
the display is further configured to display the information card editing prompt information.

19. The electronic device according to any one of claims 15 to 17, wherein the processor is further configured to:
set information in the information card to an editable state; and
the display is further configured to display the information card in the editable state.

20. The electronic device according to any one of claims 15 to 19, wherein the processor is further configured to:
determine whether the first information comprises time information; and if the first information comprises the time information, generate a reminded event based on the time information in the first information, wherein the reminded event is generating a reminder action when or before a system time of the electronic device reaches a time indicated by the time information, and the reminder action comprises at least one of the following actions: vibration, screen light-up, prompt information displaying, and ringing.

21. The electronic device according to any one of claims 15 to 20, wherein the processor is further configured to:
determine whether the time information in the first information is later than the system time of the electronic device; and if the time indicated by the time information in the first information is later than the system time of the electronic device, generate the reminded event based on the time information in the first information.

22. The electronic device according to claim 20 or 21, wherein the processor is further configured to:
when the system time of the electronic device is later than the time indicated by the time information in the first information, delete the information card.

23. The electronic device according to any one of claims 15 to 22, wherein when there are a plurality of the information cards, the processor is further configured to:
determine, according to a preset priority rule, an information card having a highest priority in the plurality of the information cards, wherein the preset priority rule comprises an importance priority and/or a time priority; and instruct the display to display the information card having the highest priority on the preset display interface of the electronic device; and
the display is further configured to display the information card having the highest priority on the preset display interface of the electronic device.

24. The electronic device according to any one of claims 15 to 22, wherein when there are a plurality of the information cards, the processor is further configured to:
determine, according to a preset priority rule, an information card having a highest priority in the plurality of the information cards, wherein the preset priority rule comprises an importance priority and/or a time priority; instruct the display to display the information card having the highest priority on the preset display interface of the electronic device; and instruct the display to display, on the preset display interface of the electronic device, the information card having the highest priority and a display portal for viewing another information card; and
the display is further configured to display, on the preset display interface of the electronic device, the information card having the highest priority and the display portal for viewing the another information card.

25. The electronic device according to any one of claims 15 to 24, wherein the touchscreen is further configured to:
receive an information card setting instruction, wherein the information card setting instruction is used to set to generate the information card based on the information storage picture when screen capture is performed on a user interface of a first application in the electronic device to generate the information storage picture; and
the processor is further configured to:
determine whether the information storage picture is a picture generated by performing screen capture on the user interface of the first application; and if the information storage picture is the picture generated by performing screen capture on the user interface of the first application, generate the information card based on the information storage picture.

26. The electronic device according to any one of claims 15 to 25, wherein the preset display interface comprises a home screen page, a lock screen interface, or a notification bar interface.

27. The electronic device according to any one of claims 15 to 26, wherein the first information comprises at least one of image information, text information, the time information, and hyperlink information.

28. A graphical user interface on an electronic device, wherein the electronic device comprises a display, one or more input devices, a memory, and one or more processors configured to execute one or more programs stored in the memory, and the graphical user interface comprises:
a user interface comprising first information, wherein
in response to a received screen capture instruction, screen capture is performed, on the user interface comprising the first information, based on the screen capture instruction to generate an information storage picture, and an information card is generated based on the information storage picture, wherein the information card comprises at least some information in the first information; and
the information card is displayed on a preset display interface.

29. A graphical user interface on an electronic device, wherein the electronic device comprises a display, one or more cameras, one or more input devices, a memory, and one or more processors configured to execute one or more programs stored in the memory, and the graphical user interface comprises:
a photographing user interface of the camera, wherein
in response to a received photographing instruction, an information storage picture is generated based on the photographing instruction, wherein the information storage picture comprises first information; and an information card is generated based on the information storage picture, wherein the information card comprises at least some information in the first information; and
the information card is displayed on a preset display interface.
